Europäisches Patentamt

European Patent Office

Office européen des brevets

(19)

(11) **EP 1 070 973 A1**

(12) ## DEMANDE DE BREVET EUROPEEN

(43) Date de publication:
**24.01.2001 Bulletin 2001/04**

(51) Int Cl.⁷: **G02B 6/124**, G02B 6/16

(21) Numéro de dépôt: **00402065.7**

(22) Date de dépôt: **20.07.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **21.07.1999 FR 9909444**

(71) Demandeur: **Highwave Optical Technologies S.A.**
**22300 Lannion (FR)**

(72) Inventeurs:
• **Mottet, Serge**
 **22300 Lannion (FR)**
• **Grosso, Philippe**
 **22300 Lannion (FR)**
• **Keromnes, Jean-Claude**
 **22420 Le Vieux Marche (FR)**

(74) Mandataire: **Texier, Christian et al**
 **Cabinet Regimbeau,**
 **26, Avenue Kléber**
 **75116 Paris (FR)**

(54) **Guide optique permettant une photoinscription améliorée**

(57) Les inviteurs ont pu constater que la photoinscription sur guide silice sur silicium se heurte, contrairement à celle sur fibre, et surtout pour les réseaux de Bragg, à une réflexion parasite du faisceau d'inscription ultra-violet sur un dioptre qui est formé par la jonction entre une couche optiquement conductrice de silice et la base en silicium.

En plus du faisceau incident, vient se superposer dans le guide un faisceau réfléchi. Ce faisceau non maîtrisé pertube l'inscription directe au point de la rendre pratiquement inefficace.

L'invention concerne un ensemble de guide optique, comprenant un guide optique (30) en silice et une base de silicium (10), caractérisé en ce qu'il comporte un aménagement anti-reflet entre le guide en silice et la base de silicium.

*FIG.9*

## Description

L'invention concerne l'opto-électronique et plus particulièrement la réalisation de composants photoinscrits intégrés silice sur silicium, passifs ou actifs, pour les réseaux optiques de télécommunications.

La photoinscription est largement utilisée dans un cas particulier de réalisation de réseaux de Bragg, celui des réseaux inscrits sur fibres optiques. Il existe ainsi de nombreuses publications sur la photoinscription sur fibres optiques.

Dans le cas de la photoinscription sur guides planaires en silice sur silicium, les publications montrent que la photoinscription est, dans le cas des réseaux de Bragg, de moins bonne qualité que celle sur les fibres. Néanmoins, les publications n'expliquent pas la cause des différences de performances observées.

Un guide planaire en silice comprend une silice de coeur dopée au germanium photosensible au UV, et une gaine non dopée qui n'est pas sensible aux UV. On réalise sur le guide une insolation qui a pour conséquence d'augmenter son indice de réfraction dans les zones insolées. On réalise ainsi par exemple un ajustement du diamètre de mode, ou une compensation dans un guide Mack-Zehnder, d'une dispersion de deux bras.

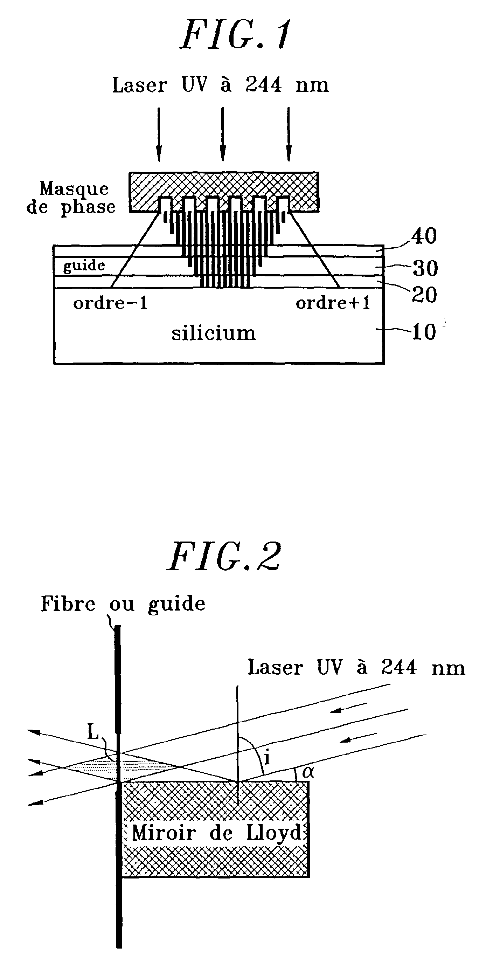

Pour obtenir un réseau de Bragg, c'est à dire un réseau à modulation d'indice, il faut insoler le guide avec un faisceau UV modulé spatialement. La modulation de l'intensité est en général obtenue par interférences, les deux montages les plus utilisés étant le masque de phase et le miroir de Lloyd tels qu'illustrés respectivement aux figures 1 et 2.

Dans les deux cas, il s'agit de créer au niveau du guide ou du coeur de la fibre, et normal à celui-ci, des franges d'interférence de pas $\Lambda$ (zones hachurées sur les figures 1 et 2). Cette modulation d'éclairement engendre au niveau du guide (ou coeur) une modulation de son indice de réfraction.

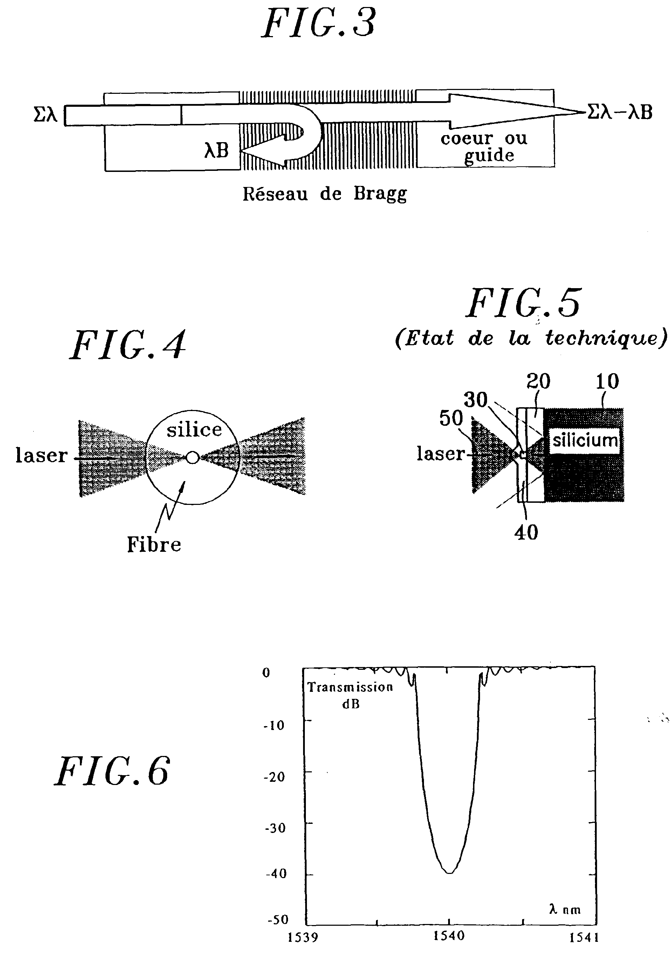

Dans son utilisation courante en propagation, le guide (ou le coeur de fibre) photoinscrit réfléchira, comme illustré à la figure 3, une longueur d'onde appelée longueur d'onde de Bragg $\lambda_B$ (figure ci-après) dont la valeur est donnée par : $\lambda_B = 2.N(\text{eff}).\Lambda$ avec $N(\text{eff}) =$ indice de réfraction effectif du guide.

Le but de la présente invention est d'améliorer la qualité de photoinscription sur guide planaire.

Ce but est atteint selon l'invention grâce à un ensemble formant guide optique, comprenant une partie constituée d'un matériau dont l'indice de réfraction évolue lorsqu'il est exposé à un faisceau ultra-violet et une partie formant base pour la partie photosensible aux ultra-violet caractérisé en ce qu'il comporte un aménagement anti-reflet entre la partie photosensible et la base.

- la figure 1 représente un montage à masque de phase, selon l'état de la technique ;
- la figure 2 représente un montage à miroir de Lloyd, selon l'état de la technique ;
- la figure 3 représente un réseau de Bragg de type connu ;
- la figure 4 est une coupe transversale d'une fibre optique en cours d'insolation, selon l'état de la technique ;
- la figure 5 est une coupe transversale d'un guide optique en cours d'insolation, selon l'état de la technique ;
- la figure 6 est un tracé représentatif de la réponse spectrale d'un guide optique selon l'invention ;
- la figure 7 est un tracé représentatif de la réponse spectrale d'un guide optique selon l'état de la technique ;
- la figure 8 est une coupe transversale d'un ensemble formant guide optique selon l'état de la technique ;
- la figure 9 est une coupe transversale d'un ensemble formant guide optique selon l'invention ;
- la figure 10 est un tracé représentatif d'une répartition d'indice de réfraction le long d'un guide optique, avec un indice moyen constant ;

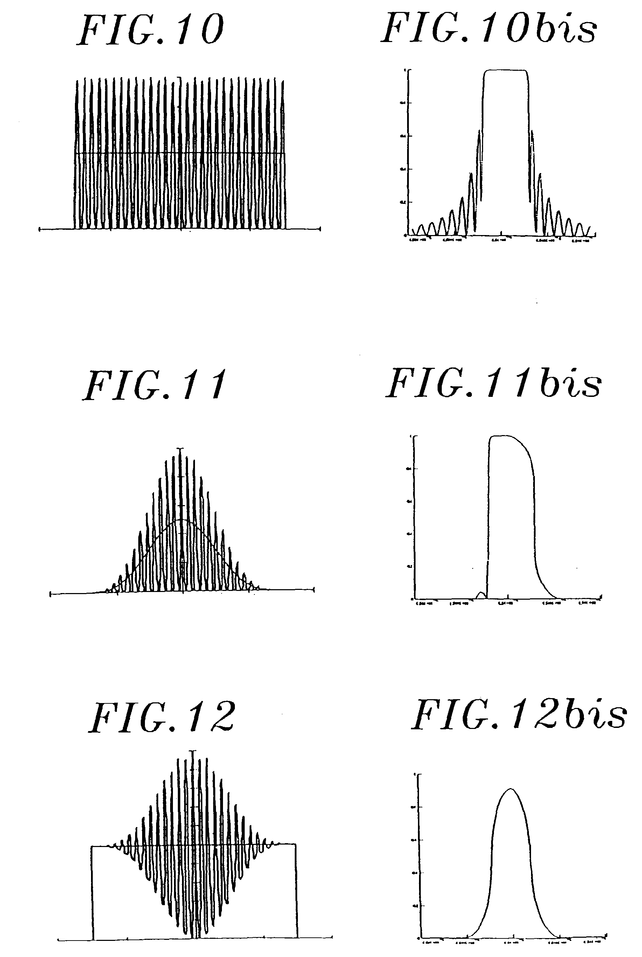

- la figure 10bis représente un spectre de réflexion d'un guide optique photoinscrit selon le tracé de la figure 10 ;
- la figure 11 est un tracé d'apodisation à répartition d'indice moyen de type gaussien ;
- la figure 11bis est un spectre de réflexion obtenu avec une répartition d'indice conforme à celle de la figure 11 ;

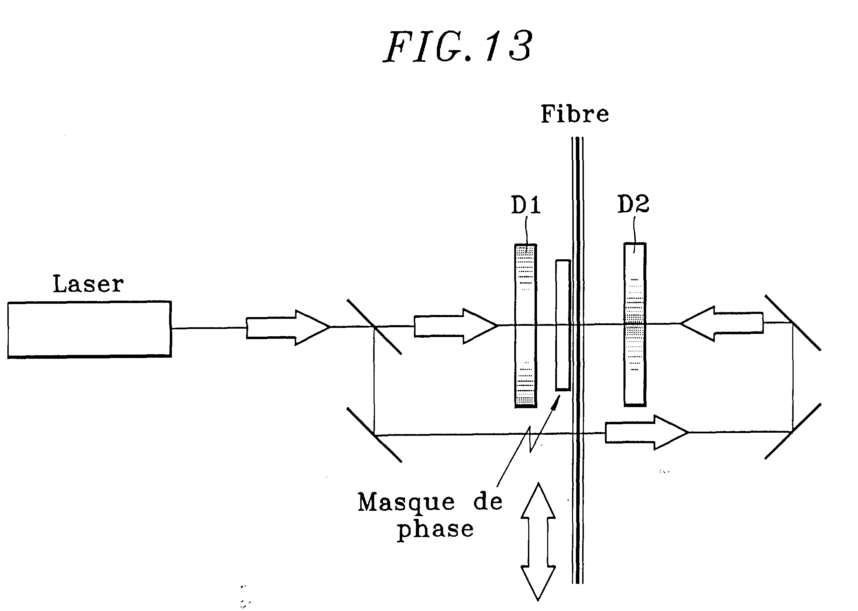

- la figure 12 est un tracé d'apodisation à répartition d'indice à enveloppes gaussiennes et à indice moyen constant ;
- la figure 12bis est un spectre de réflexion d'un guide apodisé selon le tracé de la figure 12 ;
- la figure 13 représente un montage d'apodisation à masques d'intensité, conforme à l'état de la technique ;

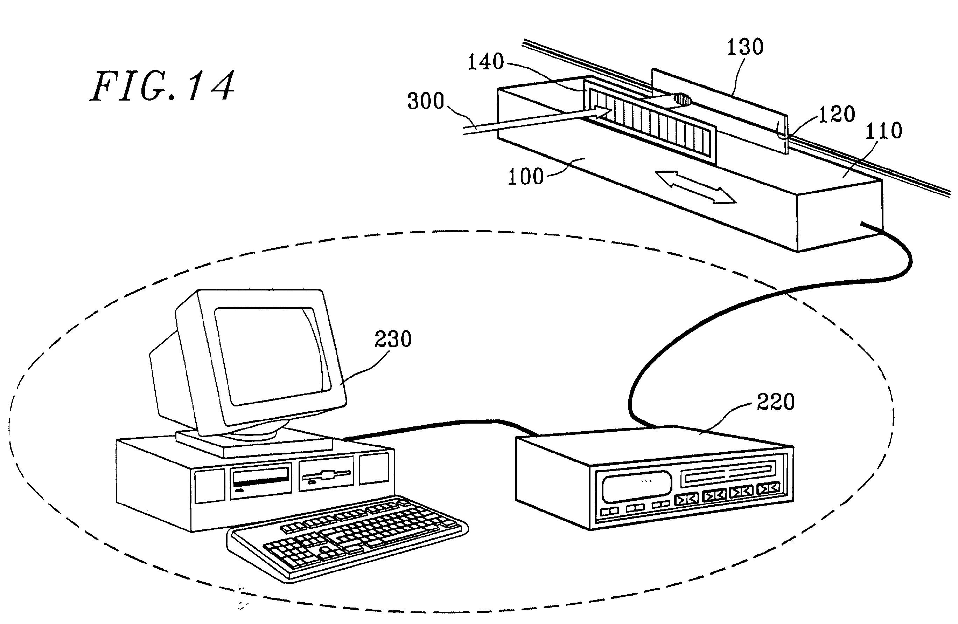

- la figure 14 représente un montage pour photoinscription conforme à l'invention ;

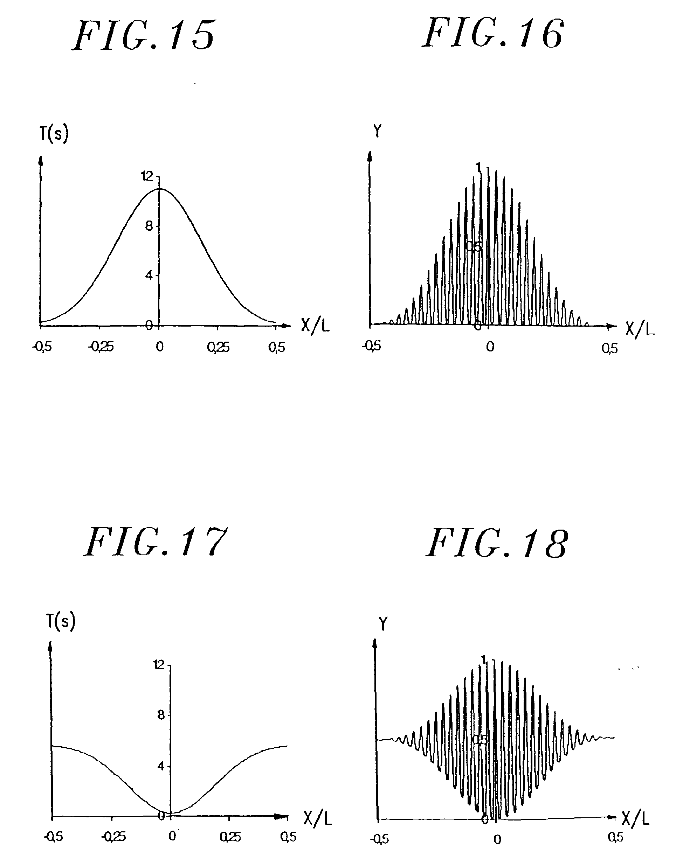

- la figure 15 représente une répartition de durée d'insolation le long d'un guide, selon l'invention ;
- la figure 16 est un tracé représentant une répartition d'indice de réfraction après une première étape d'apodisation selon l'invention ;
- la figure 17 est un tracé représentant une modulation de durée d'insolation le long d'un guide, selon l'invention ;
- la figure 18 représente une répartition d'indice de réfraction le long d'un guide optique après une second étape d'apodisation selon l'invention.

L'invention permet notamment de réaliser une photoinscription de réseau de Bragg sur guide silice sur silicium qui soit de même qualité que celle obtenue sur fibre optique, notamment d'obtenir une largeur spectrale inférieure à 0,8 nm.

Les inventeurs ont pu constater que la photoinscription sur guide silice sur silicium se heurte, contrairement à celle sur fibre, et surtout pour les réseaux de Bragg, à une réflexion parasite du faisceau d'inscription ultra-violet sur un dioptre qui est formé par la jonction entre une couche optiquement conductrice de silice et la base en silicium.

En plus du faisceau incident, vient se superposer dans le guide un faisceau réfléchi. Ce faisceau non maîtrisé perturbe l'inscription directe au point de la rendre pratiquement inefficace.

Dans le cas de la photoinscription sur fibre, tel qu'illustré sur la figure 4, le faisceau laser UV traverse une gaine optique qui est insensible à ce rayonnement, pour photoinscrire un réseau de Bragg par exemple dans le coeur photosensible de la fibre. Dans ce cas particulier, le faisceau après photoinscription continue son trajet et sort de la fibre.

Comme illustré aux figures 5 et 8, un ensemble formant guide optique silice sur silicium (Si/SiO$_2$) comporte habituellement une base ou plate-forme en silicium, sur laquelle est déposée d'abord une couche 20 appelée « couche de gaine » en silice pure, puis sur la couche de gaine 20, des guides optiques 30 constitués de silice dopée au germanium. Les guides 30 et la couche 20 sont recouverts par une couche de recouvrement en silice pure 40.

Sur un guide planaire Si/SiO$_2$ le faisceau UV incident, référencé ici 50, traverse la couche de recouvrement 40 qui est insensible à ce rayonnement, pour photoinscrire le coeur 30 selon un motif d'indice. Après inscription, le faisceau UV 50 traverse le dépôt de silice 20 et se réfléchit sur le dioptre Si/SiO$_2$ formé entre la couche de gaine 20 et la base 10, avec un taux de réflexion proche de 60% à une longueur d'onde de 244 nm.

Le faisceau réfléchi photoinscrit à nouveau le coeur 30, mais avec des caractéristiques optogéométriques différentes de celles du faisceau incident.

Dans le cas d'une fibre optique, le faisceau incident modulé spatialement par interférence inscrit un réseau de Bragg qui réfléchit λB avec typiquement une largeur spectrale inférieure à 0,8 nm et une amplitude supérieure à 35 dB. (ces valeurs sont données à titre indicatif).

Dans le dispositif décrit ici, le faisceau UV réfléchi inscrit lui aussi un réseau de Bragg qui se superpose au réseau incident désiré, mais, comme le dioptre Si/SiO$_2$ n'est pas un miroir parfait, les deux réseaux formés par les faisceaux incident et réfléchi ont des longueurs, notées ici respectivement λBi et λBr, qui sont différentes l'une de l'autre. Les inventeurs ont pu constater que ces deux longueurs d'onde présentent typiquement une différence ΛλB égale à 0.25 nm.

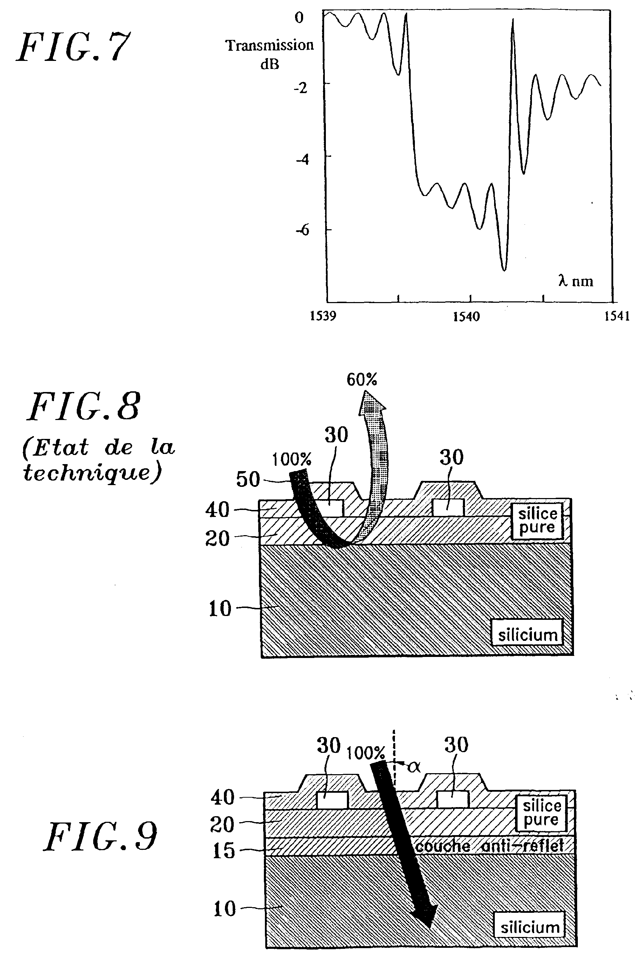

On a représenté sur la figure 7 un spectre de transmission d'un réseau obtenu par la technique habituelle. Le spectre présente un pic de réflexion inexploitable, d'amplitude faible (6dB) et de largeur spectrale importante. Il est donc nécessaire de supprimer le faisceau réfléchi par le dioptre Si/SiO2.

On a représenté à la figure 9 un ensemble formant guide optique, conforme à un exemple de réalisation de l'invention.

Cet ensemble reprend les différentes parties constitutives décrites précédemment en rapport aux dispositifs connus des figures 5 et 8, et comporte en outre un couche intermédiaire 15 située entre la couche de silicium 10 et les guides 30.

Plus précisément, cette couche 15 s'étend ici entre la couche de gaine de silice pure 20 et la couche 10.

Le rôle de cette couche 15 est de transmettre à travers la couche de silicium 10 la lumière incidente pénétrant à travers les couches depuis la face supérieure de l'ensemble. Cette couche 15 est une couche ayant une fonction anti-reflet vis à vis du faisceau incident 50. Cet ensemble est, comme pour les dispositifs de l'art antérieur décrits ci avant, réalisé par une série de dépôts successifs.

Nous savons que le silicium absorbe le rayonnement UV et en particulier celui à la longueur d'onde de 244 nm utilisée ici. Pour que tout le rayonnement incident 50 soit absorbé par le silicium 10, il faut que cette couche 15 transmette l'ensemble de ce rayonnement.

La couche anti-reflet 15 est mise en place au cours de la réalisation' du dispositif par une technique de dépôt sous vide indépendante du process de dépôt de silice. Les inventeurs ont pour cela identifié des matériaux particulièrement efficaces et des épaisseurs particulières pour la couche 15, particulièrement adaptées à ce choix de matériaux. L'indice de réfraction de cette couche 15 est ainsi préférentiellement proche de la racine du produit des indices des deux couches qui l'entourent et qui sont à son contact.

Dans le cas présent, l'indice de la couche 15 N(anti-reflets) est donné par la formule :

$$N(\text{anti-reflet}) = \sqrt{N\,(\text{Silice})\, N\,(\text{Silicium})} \qquad (1)$$

Pour un angle incident α donné du faisceau incident, l'épaisseur Ep de la couche 15 est avantageusement :

$$Ep = (2k + 1)\lambda\,/\,4N_{AR}\,\cos\alpha \qquad (2)$$

Où $N_{AR}$ est l'indice de réfraction de la couche 15, λ la longueur d'onde du faisceau incident et k un nombre entier quelconque.

Les indices de réfraction de la silice et du silicium, connus dans le visible, ont été ici calculés à la longueur d'onde de 244 nm, par extrapolation à partir de la formule de Cauchy et on a trouvé par exemple comme matériaux répondant au critère d'indice de la relation (1), le SiO, le Si$_3$N$_4$ ou le TiO$_2$.

L'épaisseur a été, dans l'exemple décrit ici, choisie pour k = 1 et α = 13° dans la relation (2).

Dans un procédé de photoinscription à l'aide d'un dispositif d'interférences, on obtient en sortie du dispositif d'interférence, au niveau de la surface supérieure de la couche de revêtement 40, et pour chaque frange d'interférence, deux faisceaux incidents ayant des inclinaisons α et -α de 13° par rapport à la normale à la face supérieure du dispositif.

On a alors obtenu une réflexion résiduelle particulièrement faible, de l'ordre de 4% et, cette réflexion ne semble constituée que par une réflexion due à un autre dioptre formé par une surface d'entrée entre l'air et la couche de silice 40 de recouvrement. Le coefficient de transmission de la couche anti-reflet 15 est donc très proche de 1.

Comme on peut le voir sur la figure 6, le spectre de réflexion obtenu présente une longueur spectrale de 0,5 nm et une amplitude de 40dB. La photoinscription dans ces conditions ne souffre donc plus de l'effet parasite et non contrôlable du faisceau réfléchi et retrouve la qualité que l'on connaît sur fibre.

On réalise avantageusement, en termes d'aisance de réalisation et de précision sur l'apodisation, la photoinscription d'un tel dispositif selon le procédé qui va être décrit maintenant.

On utilise pour cela le dispositif d'insolation de la figure 14 qui comprend notamment un moteur de translation 100 alimenté par un générateur électrique 220 piloté par un ordinateur 230.

Le moteur 100 est prévu pour déplacer un plateau supérieur 110 sur lequel est placé un ensemble comprenant notamment un guide en silice 120 fixé sur une plaque de silicium 130 ainsi qu'un masque de phase 140.

L'ensemble guide silice 120 sur silicium 130 est plus exactement ici un ensemble muni d'une couche anti-reflet, conforme à l'exemple de réalisation donné ci-avant.

Un faisceau laser 300 est placé latéralement à ce montage, en position fixe de manière à former des franges sur le guide 120 par l'action du masque 140.

L'ordinateur 230 est programmé de façon à faire générer à la source 220 des impulsions électriques propres à translater le plateau 110 selon un mouvement de type pas à pas, avec, entre chaque pas, un temps d'attente choisi, enregistré à l'avance dans la mémoire de l'ordinateur 230.

L'indice de réfraction à chaque emplacement est proportionnel au temps d'immobilité du faisceau devant cet emplacement. L'ordinateur calcule de lui-même le temps d'immobilité à chaque pas en fonction de la répartition d'indice souhaitée.

Plus précisément, l'ordinateur 230 propose à un utilisateur un menu dans lequel figurent diverses courbes de modulation d'indice de réfraction. Une fois choisie la courbe de modulation, l'ordinateur utilise des données de commande de la progression du chariot correspondante, c'est à dire une répartition des temps d'attente du faisceau à chaque pas, selon une courbe préenregistrée similaire à celle choisie par l'utilisateur.

On propose donc une technique d'apodisation ne se basant pas sur la variation d'intensité du faisceau laser, mais dans laquelle on agit sur le temps d'exposition de celui-ci en fonction de sa position.

Dans le présent exemple de réalisation, l'ordinateur 230 commande deux passages successifs du chariot 100 devant le faisceau, un premier passage étant effectué avec le masque de phase 140 disposé devant le guide 120, le deuxième passage étant effectué sans le masque 140. Ces deux passages sont effectués dans des sens opposés pour éviter un retour chariot entre les deux passages. Lors du premier passage avec le masque 140, le faisceau forme à chaque pas des franges d'interférence sur le guide dans une zone restreinte alignée avec le faisceau.

Le masque 140 forme donc des franges et la durée de formation de chaque frange est modulée par le temps de présence du faisceau devant elle. Ainsi en adoptant pour le faisceau un temps de passage modulé selon une courbe de type gaussienne comme celle représentée à la figure 15, on obtient une répartition de l'indice de réfraction telle que celle représentée à la figure 16, c'est à dire une répartition d'indice formant des sinusoïdes dont l'amplitude varie selon une courbe gaussienne.

En d'autres termes, chaque frange d'interférence est formée sur le guide pendant une durée variable selon la frange, cette durée dépendant de la vitesse avec laquelle le faisceau circule au niveau de cette frange.

La courbe de la figure 15 représente, en fonction de la position le long du guide, le temps d'insolation ou temps de passage du faisceau devant cette position. En d'autres termes, les ordonnées de cette courbe sont inversement proportionnelles à celles d'une courbe représentant la vitesse moyenne du faisceau devant chaque emplacement considéré du guide, la vitesse moyenne en un point donné du guide étant définie par la largeur du faisceau sur le temps de présence du faisceau devant ce point.

Le deuxième passage sans masque vise à appliquer une correction' continue de l'indice de réfraction, c'est à dire sans franges d'interférence.

Le tracé de la figure 17 représente ainsi le temps de passage du faisceau en fonction de la position considérée sur le guide au cours de cette deuxième étape. Cette courbe présente une forme gaussienne inversée. En d'autres termes, les extrémités du guide sont insolées avec une durée plus élevée que les parties centrales du guide. Ce deuxième passage produit donc une augmentation de l'indice de réfraction accentuée au niveau des extrémités du guide.

Cette deuxième insolation continue réalise l'apodisation de la partie continue c'est à dire l'apodisation de l'indice moyen du réseau.

La répartition finale de l'indice après ces deux passages est représentée sur la figure 18, sur laquelle le tracé présente la forme d'une sinusoïdale oscillant entre deux enveloppes symétriques l'une à l'autre par rapport à une droite horizontale. L'indice de réfraction varie donc autour d'une valeur moyenne qui est la même tout au long du guide.

On obtient ainsi une courbe d'apodisation optimale, particulièrement précise par l'adoption combinée de la couche anti-reflet et du dispositif de photoinscription décrit ici, cette apodisation étant encore améliorée par un choix d'une fonction mathématique particulière de répartition de l'indice qui sera décrite maintenant.

Pour la première étape d'apodisation, les formules classiques adaptées ici pour une répartition de la fluence Y sont les suivantes, où X est la position longitudinale du faisceau sur le guide, avec X = 0 au centre du guide, et où L est la longueur photoinscrite.

- Formule de Gauss : $Y = A.\exp[-G(X/L)^2]$ avec $G = 15$,
- Formule de Hamming : $Y = A.(1 +H\cos[(2\pi X/L)/1+H]$ avec $H = 0,55$,
- Formule de Blackman : $Y=[1+(1+B)\cos (2\pi X/L)+B \cos (4\pi X/L)]/ (2+2B)$ avec $B = 0,18$.

Nous proposons ici de travailler avec la formule suivante :

$$Y_1 = A.\cos^4(M.X/L)$$ avec $M = 2,78$. Cette loi permet d'apodiser la modulation de l'indice de réfraction du réseau le long du guide planaire avec une très grande souplesse d'utilisation et une très grande précision dans la forme de l'enveloppe de modulation.

Dans cette formule, $Y_1$ est le temps d'insolation et A est la puissance du laser UV (244 nm). La constante M optimise l'enveloppe d'apodisation.

Pour la deuxième étape d'insolation, on applique une répartition de la fluence $Y_2$. La fluence est donnée par la formule : [puissance laser] [temps] / [unité de surface] (solution proposée pour les fibres) ou dans l'exemple donné ici par le temps d'exposition.

$$Y_2(X) = (Y_0 - Y_1(X))/2$$

Dans cette formule, $Y_0$ est la valeur de $Y_1$ à l'abscisse 0, c'est à dire la valeur maximale de $Y_1$ le long du guide.

La coïncidence de positionnement entre les deux passages s'effectue avec une précision d'un pas (c'est à dire pour notre moteur une précision de 1 $\mu$m).

Les courbes: temps = f (position) sont programmées dans l'ordinateur qui est ici de type PC. L'unité de temps est celle de l'horloge du PC. Dans un mode de réalisation préférentiel, le dispositif de commande propose un menu avec le choix :

- de la formule utilisée (Blackman, Gauss... ),
- du coefficient appliqué,
- de la longueur de photoinscription,
- et du pas de déplacement,

ce qui procure une extrême souplesse au procédé.

Pendant la photoinscription, un affichage montre les courbes « temps = f (position) », à la fois la courbe théorique et celle effectivement réalisée.

On prévoit avantageusement une possibilité d'ajustement de la puissance du laser, et la possibilité d'ajouter un décalage (offset) sur les courbes préétablies.

Dans l'exemple d'apodisation qui vient d'être donné ici, le guide est un guide droit en silice sur silicium.

Le procédé d'apodisation décrit ici s'applique cependant également à tous les composants en silice sur silicium ou à fibre qui utilisent un réseau de Bragg photoinscrit.

[1] B. MALO and Al. El Letters, V31, p.223 (1995) (CRC, Ottawa).

Premier passage sans masque de phase à travers un masque à densité variable (cos2) puis deuxième passage avec masque de phase à travers le masque complémentaire.

[2] J. ALBERT and Al El Letters, V31, N° 3, p.222 (1995) (CRC, Ottawa) Photoinscription à l'aide d'un masque de phase ayant une profondeur de gravure non constante (gaussienne)

[3] M.J. COLE and Al. Letters, V31, N° 17, p.488 (1995) (University of Southampton) and Al. Opt. Letters, V20, N°20, p.2051 (1995) (University of Southampton)

Photoinscription de réseaux brouillés aux bords et en phase au centre grâce à la vibration de la fibre contrôlée par des modules piézo-électriques (Amplitude de la fréquence de forme Gaussienne et Blackman)

[4] R. KASHIAP and Al. Letters, V32, N°13, p.226 (1996) (British Telecom, Ipswich)

Photoinscription simultanée de deux réseaux décalés d'une demi période sur les bords et en phase au centre grâce à deux modules piézo-électriques étirant la fibre sur deux positions discrètes (Résultat de l'apodisation de forme cosinus).

[5] M. GUY and Al. ECO 97, p.195 (INO, Sainte Foy (Québec)

Photoinscription à l'aide d'un miroir monté sur un galvanomètre placé avant le masque de phase. Suivant son angle, les franges sont brouillées ou superposées.

[6] K.E. CHISHOLM and Al. ECOC 98, p.385 (University of Birmingham)Idem COLE et LOH avec forme Gaussienne et cosinus. Module piézo-électrique sur le masque de phase.

[7] H. SINGH and Al. ECOC 98, p.189 (3M Bragg Grating Technologies, Bloomfield USA)

Séparation du faisceau laser en deux parties. La première passe à travers un filtre ayant le profil d'apodisation souhaité puis sur le masque de phase avant d'insoler la fibre. La deuxième partie insole la fibre par le sens opposé (sans être diffractée par le masque) à travers un filtre ayant un profil inverse au premier dans le but d'avoir un indice moyen constant).

[8] P. MERCIER and Al. JNOG 98, p.359 (Alcatel, Marcoussis) Apodisation de forme Blackman

[9] P.Y. CORTES and Al E. Letters, V34, N°4, p.396 (1998) (Université Laval Québec)

Un montage interférométrique est placé derrière la fibre et le masque de phase dans le but de créer un réseau de frange d'amplitude gaussienne.

[10] H.G. FRÔHLICH and R.KASHYAP, Opt Com, V157, p.273 (déc. 1998) (BT, Ipswich)

2 méthodes grâce à un montage d'interférences de type « fentes d'Young » (sans masque de phase) :

- en lumière incohérente (polychromatique) à des longueurs d'onde proches de 244 nm. Les franges d'interférences ont alors une enveloppe Gaussienne.
- en lumière cohérente. Après une première photoinscription, on place dans un deuxième temps, sur un des faisceaux, un coin en silice qui introduit une différence de marche et de position qui créé des franges d'interférences se superposant aux premières pour donner finalement une amplitude de modulation d'enveloppe Gaussienne.

[11] L. QUETEL and L. RIVOALLAN (Brevet 97) (Highware Optical Technologies, Lannion)

Variation de la puissance UV insolée grâce à une pale tournante mobile de forme ad-hoc placée sur le trajet du faisceau qui induit une amplitude gaussienne de la modulation d'indice photoinscrite.

[12] V. MIZRAHI and J.E. SIPE (AT & T Bell labs and University Toronto) « Optical properties of photosensitive fiber phase gratings »

Journal of lightware technology, V11, N°10, p. 1513, 1993 (Comparaison modélisation-expérience de l'effet Fabry-Pérot et du mode de gaine)

[13] D.PASTOR and Al (ETSI telecommunication, Valencia)

« Design of apodized linearly chirped fiber gratings for dispersion compensation »

Journal of lightware technology, V.14, N°11, p1513, 1996 (Comparaison théorique de différentes fonctions d'apodisation)

[14] J.CANNING and Al (APCRC, New South Wales (Australie)

« Characterization of apodized fiber Bragg gratings for rejection filter applications »

Applied optics, V36, N°36, p9378, 1997 (Mesure précise des indices de réseaux de Bragg apodisés par diffusion Rayleigh)

## Revendications

1. Ensemble formant guide optique, comprenant une partie (30) constituée d'un matériau photosensible, tel que l'indice de réfraction de ce matériau évolue lorsqu'il est exposé à un faisceau ultra-violet, et une partie formant base (10) pour la partie photosensible (30), caractérisé en ce qu'il comporte un aménagement anti-reflet (15) entre la partie photosensible et la base (10).

2. Ensemble selon la revendication 1, caractérisé en ce que la partie photosensible (30) est en silice et la base (10) est en silicium.

3. Ensemble formant guide optique selon la revendication 1 ou la revendication 2, caractérisé en ce que l'aménagement anti-reflet (15) est constitué par une couche (15) ayant un indice de réfraction ($N_{AR}$) voisin de la racine carrée du produit des indices de réfraction de deux couches (10, 20) situées de part et d'autre et au contact de cette couche anti-reflet (15).

4. Ensemble selon l'une des revendications 1 à 3, caractérisé en ce que l'aménagement anti-reflet (15) est constitué d'une couche (15) située entre et au contact d'une couche de silice (20) et d'une couche de silicium (10).

5. Ensemble selon l'une des revendications précédentes, caractérisé en ce qu'il forme un guide optique (30) présentant un indice de réfraction modulé le long du guide (30), selon une modulation telle que ledit ensemble forme un réseau de Bragg.

6. Ensemble selon l'une des revendications précédentes, caractérisé en ce que l'aménagement anti-reflet (15) est constitué d'un matériau choisi parmi SiO, $Si_3N_4$ et $TiO_2$.

7. Procédé de réalisation d'un ensemble formant guide optique, comprenant une partie en matériau photosensible tel que son indice de réfraction soit modifié lorsqu'il est exposé aux ultra-violets, et une base (10) recevant cette partie photosensible, caractérisé en ce que l'on dispose entre la partie photosensible (30) et la base (10) une couche anti-reflet (15).

8. Procédé selon la revendication 7, caractérisé en ce que la partie photosensible (30) forme un guide optique (30) que l'on insole avec au moins un faisceau (50) ayant une longueur d'onde λ et un angle d'incidence α au niveau d'une face supérieure de l'ensemble, α étant mesuré par rapport à la normale à cette face supérieure, et en ce que l'on dispose entre la partie photosensible (30) et la base (10) une couche anti-reflet (15) dont l'épaisseur est choisie sensiblement égale à un nombre impair de fois la valeur $\frac{\lambda}{4N\cos\alpha}$ où N est l'indice de réflexion de la couche anti-reflet (15).

9. Procédé selon la revendication 8, caractérisé en ce que l'on choisit l'épaisseur de la couche anti-reflet (15) sensiblement égale à : $\frac{\lambda}{4N\cos\alpha}$

10. Procédé selon l'une des revendication 8 ou 9, caractérisé en ce que l'on adopte pour ledit au moins un faisceau incident (50) un ou des angle(s) d'inclinaison α sensiblement égaux à 13°.

11. Procédé selon l'une des revendications 7 à 10, caractérisé en ce que l'indice de réfraction N de la couche anti-reflet (15) est choisi sensiblement égal à la racine carrée du produit des deux indices de réfraction de deux matériaux (10, 20) situés de part et d'autre de la couche anti-reflet (15) et au contact de celle-ci.

12. Procédé selon l'une des revendications 7 à 11, caractérisé en ce qu'on parcourt le guide (120) avec un faisceau lumineux (300) et on prévoit des moyens (100, 220, 230) pour moduler le temps d'insolation le long du guide (120) en modulant la rapidité de progression du faisceau (300) le long du guide (120) pour que celui-ci se trouve positionné face à chaque emplacement du guide (120) pendant une durée variable selon l'emplacement.

13. Procédé selon la revendication 12, caractérisé en ce qu'il comprend l'étape consistant à placer devant le guide (110) un dispositif (140) apte à créer des franges d'interférences sur le guide (120) et à faire balayer au faisceau (300) le dispositif d'interférences (140) avec une rapidité de progression modulée le long de ce dispositif (140).

14. Procédé selon la revendication 13, caractérisé en ce qu'il comprend en outre l'étape consistant à faire parcourir le guide (120) au faisceau (300) selon une rapidité de progression modulée, sans placer de dispositif (140) d'interférences sur le trajet du faisceau (300).

15. Procédé selon l'une des revendications 12 à 14, caractérisé en ce que l'on utilise un dispositif d'entraînement (100, 220, 230) automatique à commande programmable (230) pour produire l'entraînement relatif du faisceau (300) et du guide (120).

16. Procédé selon la revendication 15, caractérisé en ce que le dispositif d'entraînement (100, 220, 230) est prévu pour produire un déplacement relatif du guide (120) et du faisceau (300) qui est de type pas à pas et en ce que le dispositif de commande (230) comprend une mémoire dans laquelle sont enregistrées les durées d'immobilisation relative du faisceau (300) et du guide (120) pour chaque pas.

17. Procédé selon les revendications 13 et 14 en combinaison, caractérisé en ce que le balayage avec dispositif d'interférences (140) est effectué avec une modulation de la durée d'insolation formant une élévation de la durée d'insolation en partie centrale du guide (120) et le balayage sans dispositif d'interférence est effectué avec une modulation de la durée d'insolation présentant une diminution de la durée d'insolation en partie centrale du guide (120).

# FIG.1

Laser UV à 244 nm

Masque
de phase

guide

ordre-1                    ordre+1

silicium

40
30
20
10

# FIG.2

Fibre ou guide

Laser UV à 244 nm

L

i

α

Miroir de Lloyd

## FIG.3

Réseau de Bragg

## FIG.4

## FIG.5
(Etat de la technique)

## FIG.6

*FIG.7*

Transmission dB

0

-2

-4

-6

λ nm

1539          1540          1541

*FIG.8*

*(Etat de la technique)*

60%

100%

30          30

50

40

20

silice pure

10

silicium

*FIG.9*

30  100%  α  30

40

20

15

silice pure

couche anti-reflet

10

silicium

# FIG.10

# FIG.10bis

# FIG.11

# FIG.11bis

# FIG.12

# FIG.12bis

# FIG.13

Fibre

Laser

D1

D2

Masque de
phase

EP 1 070 973 A1

# FIG.14

# FIG.15

# FIG.16

# FIG.17

# FIG.18

Office européen
des brevets

**RAPPORT DE RECHERCHE EUROPEENNE**

Numéro de la demande

EP 00 40 2065

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN vol. 011, no. 270 (P-611), 3 septembre 1987 (1987-09-03) & JP 62 071907 A (CANON INC), 2 avril 1987 (1987-04-02) * abrégé * | 1-7 | G02B6/124 G02B6/16 |
| A | | 8-11 | |
| X | PATENT ABSTRACTS OF JAPAN vol. 1995, no. 07, 31 août 1995 (1995-08-31) & JP 07 098404 A (MATSUSHITA ELECTRIC IND CO LTD), 11 avril 1995 (1995-04-11) * abrégé * | 1-7 | |
| A | | 8-11 | |
| A | EP 0 303 836 A (SUMITOMO ELECTRIC INDUSTRIES) 22 février 1989 (1989-02-22) * abrégé * | 1-11 | |
| A | EP 0 805 365 A (FUJIKURA LTD) 5 novembre 1997 (1997-11-05) * abrégé; figures 2,8,10B,15B,16B,17B,17C,18B,18C * * page 12, ligne 25 - page 14, ligne 22 * | 12-17 | DOMAINES TECHNIQUES RECHERCHES (Int.Cl.7) G02B |
| A | EP 0 893 712 A (SUMITOMO ELECTRIC INDUSTRIES) 27 janvier 1999 (1999-01-27) * abrégé; figure 4 * * page 3, ligne 23 - ligne 43 * * page 5, ligne 51 - page 6, ligne 3 * | 12-17 | |
| A | WO 98 12586 A (FOKINE MICHAEL ;IOF INST FOER OPTISK FORSKNING (SE)) 26 mars 1998 (1998-03-26) * abrégé; figures 2-4 * * page 12, ligne 1 - ligne 7 * * page 12, ligne 7 - ligne 27 * | 12-17 | |

-/--

Le présent rapport a été établi pour toutes les revendications

| Lieu de la recherche | Date d'achèvement de la recherche | Examinateur |
|---|---|---|
| LA HAYE | 13 octobre 2000 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**Office européen des brevets**

# RAPPORT DE RECHERCHE EUROPEENNE

Numéro de la demande

EP 00 40 2065

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 915 354 A (FURUKAWA ELECTRIC CO LTD) 12 mai 1999 (1999-05-12) * abrégé * * colonne 5, ligne 24 - ligne 33 * * colonne 9, ligne 1 - ligne 3 * * colonne 9, ligne 57 - colonne 10, ligne 12 * --- | 12-17 | |
| A | WO 97 22023 A (BRITISH TELECOMM ;KASHYAP RAMAN (GB)) 19 juin 1997 (1997-06-19) * page 4; figures 4A,10,12 * * page 6, ligne 6 - page 7, ligne 16 * ----- | 12-17 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 13 octobre 2000 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 00 40 2065

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2000

| Document brevet cité au rapport de recherche | | Date de publication | Membre(s) de la famille de brevet(s) | | Date de publication |
|---|---|---|---|---|---|
| JP 62071907 | A | 02-04-1987 | AUCUN | | |
| JP 07098404 | A | 11-04-1995 | AUCUN | | |
| EP 0303836 | A | 22-02-1989 | JP | 58179805 A | 21-10-1983 |
| | | | JP | 1466203 C | 10-11-1988 |
| | | | JP | 58182604 A | 25-10-1983 |
| | | | JP | 63010801 B | 09-03-1988 |
| | | | JP | 58190921 A | 08-11-1983 |
| | | | CA | 1211868 A | 23-09-1986 |
| | | | CA | 1227678 C | 06-10-1987 |
| | | | DE | 3381755 D | 30-08-1990 |
| | | | EP | 0092395 A | 26-10-1983 |
| | | | US | 4560249 A | 24-12-1985 |
| | | | US | 4673241 A | 16-06-1987 |
| EP 0805365 | A | 05-11-1997 | JP | 9288204 A | 04-11-1997 |
| | | | JP | 9288205 A | 04-11-1997 |
| | | | JP | 9304638 A | 28-11-1997 |
| | | | CA | 2202308 A | 19-10-1997 |
| | | | US | 5996375 A | 07-12-1999 |
| EP 0893712 | A | 27-01-1999 | JP | 11095033 A | 09-04-1999 |
| | | | US | 6021242 A | 01-02-2000 |
| WO 9812586 | A | 26-03-1998 | SE | 510703 C | 14-06-1999 |
| | | | AU | 4407097 A | 14-04-1998 |
| | | | CN | 1234123 A | 03-11-1999 |
| | | | EP | 0927374 A | 07-07-1999 |
| | | | SE | 9603406 A | 18-03-1998 |
| EP 0915354 | A | 12-05-1999 | JP | 11142651 A | 28-05-1999 |
| | | | JP | 11316313 A | 16-11-1999 |
| | | | JP | 11326672 A | 26-11-1999 |
| | | | JP | 11326674 A | 26-11-1999 |
| | | | JP | 11326673 A | 26-11-1999 |
| | | | JP | 11326656 A | 26-11-1999 |
| WO 9722023 | A | 19-06-1997 | CA | 2239730 A | 19-06-1997 |
| | | | EP | 0866989 A | 30-09-1998 |
| | | | JP | 2000501852 T | 15-02-2000 |
| | | | CA | 2241544 A | 24-07-1997 |
| | | | EP | 0875013 A | 04-11-1998 |
| | | | WO | 9726570 A | 24-07-1997 |
| | | | JP | 2000503413 T | 21-03-2000 |

EPO FORM P0460

Pour tout renseignement concernant cette annexe : voir Journal Officiel de l'Office européen des brevets, No.12/82